# EUROPÄISCHE PATENTSCHRIFT

(11) **EP 2 550 078 B1**
(45) Veröffentlichungstag und Bekanntmachung des Hinweises auf die Patenterteilung: **11.03.2015**
(21) Anmeldenummer: 10809139.8
(22) Anmeldetag: 24.12.2010
(51) Int. Cl.: B01D 3/10, B01D 5/00, C11B 3/12, C11B 3/14

(54) **VERFAHREN ZUM DESODORIEREN VON SPEISEÖL**
PROCESS FOR DEODORIZING EDIBLE OIL
PROCÉDÉ DE DÉSODORISATION D'HUILE ALIMENTAIRE

(30) Priorität: 26.02.2010 DE 102010009579
(43) Veröffentlichungstag der Anmeldung: 30.01.2013
(73) Patentinhaber: Air Liquide Global E&C Solutions Germany GmbH, 60439 Frankfurt am Main (DE)
(72) Erfinder: GABOR, Jürgen, 64390 Erzhausen (DE); REICHWEIN, Steffen, 64823 Groß-Umstadt (DE)
(86) Internationale Anmeldenummer: PCT/DE2010/001522
(87) Internationale Veröffentlichungsnummer: WO 2011/103846

(56) Entgegenhaltungen:
- WO-A1-2006/118517
- WO-A2-03/020860
- DE-T2- 60 115 605
- DE-T2- 60 306 515
- US-A1- 2004 030 166
- "Desodorisierung (excerpt) ED - Marek Singer", 1. Januar 1992 (1992-01-01), GEWINNUNG UND VERARBEITUNG DER PFLANZLICHEN FETTE UND ÖLE, VERLAG FÜR CHEM. INDUSTRIE, AUGSBURG, DE, PAGE(S) 234 - 238, XP009148196, ISBN: 978-3-87846-145-6 in der Anmeldung erwähnt das ganze Dokument

## Beschreibung

Um die Qualität von Speiseölen zu verbessern, werden diese einer desodorierenden Behandlung unterworfen, durch die sich Geruchs- und Geschmacksstoffe mittels Wasserdampfdestillation unter Vakuum aus Speiseöl entfernen lassen; dabei werden die schwerflüchtigen und lipidlöslichen Stoffe durch Verdampfen beseitigt. Die Geruchs- und Geschmacksstoffe befinden sich im Kondensat der Desodorierungsbrüden. Im Destillat sind die Stoffe enthalten, die bei normaler Temperatur und normalem Druck nicht flüchtig und wasserunlöslich sind, sowie bei der Desodorierung mitgerissenes Speiseöl. Von praktischer Bedeutung sind Fettsäuren, Sterole und Tocopherole; letztere besitzen einen Einfluss auf die Oxidationsstabilität der Speiseöle und werden daher als Antioxidantien in Lebensmitteln benutzt. Diese Stoffe spielen auch als Provitamine eine physikalische Rolle, da sich die Tocopherole in Vitamin E und die Sterole in Vitamin D verwandeln. Die aus dem Destillat gezielt gewonnenen Sterole und Tocopherole werden daher als Rohmaterial in der pharmazeutischen Industrie und in der Lebensmittelindustrie verwendet.

Die technische Desodorierung von Speiseöl wird sowohl in halbkontinuierlicher wie in vollkontinuierlicher Arbeitsweise betrieben. Bei der halbkontinuierlichen Arbeitsweise ist eine Destillationskolonne in wenigstens fünf gegeneinander absperrbare Stufen, die eine Kapazität von 5 bis 8, vorzugsweise 7 t pro Stufe aufweisen, eingeteilt. Jede Stufe ist mit einer Heiz- bzw. Kühlschlange und Zuleitungen für Einblasedampf (Strippdampf) ausgerüstet. Die Stufen haben eine gemeinsame Brüdenabgangsleitung, die über einen Brüdenwäscher an eine Vakuumerzeugungsleitung angeschlossen ist. In der Destillationskolonne werden durch Beheizung mit Hochdruckdampf eine Temperatur von 240 bis 260° C bei einem Vakuum von 1, 3 bis 2, 6 mbar und bei einer Verweilzeit von 20 bis 40 min je Stufe in Abhängigkeit von der Betriebstemperatur eingestellt. Der Fluss des Speiseöls durch die Destillationskolonne wird automatisch nach vorgegebenen Verweilzeiten gesteuert. Die zu behandelnde Charge Speiseöl wird der ersten Stufe zugeführt, in der die Entgasung und teilweise die Aufheizung stattfinden. Das Speiseöl gelangt darauf in die zweite Stufe, in der es auf die Temperatur von 240 bis 260° C gebracht wird, strömt bei diesen Temperaturen durch die dritte und vierte Stufe und gelangt dann in die fünfte als Kühlstufe wirkende Stufe, in der eine Kühlung bis auf eine Temperatur von etwa 100° C erfolgt. Die aus den Stufen abgehenden Brüden werden in der Brüdenabgangsleitung gesammelt und in einen Brüdenwäscher geleitet, in dem die Brüden mit umlaufender und versprühter Fettsäure ständig gewaschen werden. In dem Brüdenwäscher sammelt sich der überwiegende Teil der mitgeführten organischen Stoffe in einer Mischung aus freien Fettsäuren, Sterolen und Tocopherolen. Das deodoerierte Speiseöl wird vom Boden der als Kühlstufe wirkenden Stufe abgezogen (Singer ,M.: Gewinnung und Verarbeitung der pflanzliche Fette und Öle; Verlag für chemische Industrie, H. Ziolkowsky KG, Augsburg 1992, S. 234 - 238). Der Nachteil dieses Verfahrens besteht darin, dass sich die bei der Desodorierung gewonnene Fettsäure nicht sortenrein kondensieren lässt. WO 03/020860 beschreibt ein Verfahren zum Behandeln von Dämpfekondensat durch fraktionierte Kondensation einer an Sterolen und Tocopherolen reichen und einer armen Fettsaürephase.

Es ist die Aufgabe der vorliegenden Erfindung, das eingangs beschriebene, halbkontinuierlich betriebene Verfahren zum Desodorieren von Speiseölen so auszugestalten, dass sich eine an Sterolen und Tocopherolen reiche Fettsäurephase und eine von Sterolen und Tocopherolen arme Fettsäurephase getrennt voneinander gewinnen lassen.

Gelöst ist diese Aufgabe dadurch wie den Ansprüchen 1-7 definiert. Es wird die in der stromwärts ersten Trennstufe des mittleren Abschnitts der Strippkolonne befindliche Charge indirekt erwärmt und die aus den Trennstufen des mittleren Abschnitts der Strippkolonne abgehenden Brüden in wenigstens zwei Kondensationsstufen indirekt gekühlt und sortenrein fraktioniert, wobei in einer ersten Kondensationsstufe eine an Sterolen und Tocopherolen reiche Fettsäurephase und in einer zweiten Kondensationsstufe eine an Sterolen und Tocopherolen arme Fettsäurephase kondensiert werden. Die die überwiegenden Mengen an Fettsäuren, Sterolen und Tocopherolen enthaltenden Brüden entstehen in den im mittleren Abschnitt der Strippkolonne befindlichen Trennstufen, werden gesammelt und den Kondensationsstufen zugeführt, in denen die Brüden mit temperiertem Kühlwasser indirekt jeweils mittels eines Plattenwärmeübertragers gekühlt werden. Darüber hinaus werden die restlichen Brüden über eine als Kühlfalle wirkenden Kondensationsstufe, vorzugsweise einen Plattenwärmeübertrager geleitet, um die Brüden von Mitrissen an Speiseöl, die eine unerwünschte Belastung der Vakuum-Erzeugungsanlage verursachen, zu befreien. Die Plattenwärmeübertrager werden getrennt voneinander, vorzugsweise mit temperiertem Kühlwasser gekühlt. Ein besonderer Vorteil ist darin zu sehen, dass die halbkontinuierlich betriebene Destillationsanlage einen Sortenwechsel in der Beschickung des Speiseöls ohne Unterbrechung des Desodorierungsprozesses ermöglicht, da die Destillationsanlage nicht entleert werden muss. Der Brüdenabzug der einzelnen Trennstufen als auch die Anzahl der Kondensationsstufen lassen sich variieren, so dass eine sortenreine Kondensation bei aufeinander folgenden Chargen gewährleistet ist. Je nach Anzahl der unterschiedlichen Einsatz-Speiseöle sind entsprechend viele Vorlagebehälter mit je einer Kammer für die an Sterolen und Tocopherolen reiche Fettsäurephase und die von Sterolen und Tocopherolen arme Fettsäurephase vorgesehen.

Die Steuerung des Desodorierungsprozesses erfolgt mit Hilfe eines Prozess-Leitsystems, durch das die einzelnen Prozessschritte automatisch steuerbar und überwachbar sind.

Nach einem besonderen Merkmal der Erfindung wird die Destillationsanlage mit wenigstens zwei Chargen desselben Speiseöls in Folge beschickt, um das Herstellen sortenreiner Fettsäurephasen auch bei einem Wechsel des zu desodorierenden Speiseöls zu erreichen.

Eine bevorzugte Ausbildung der Erfindung besteht darin, dass die Trennstufen des unteren Abschnitts der Strippkolonne über Wärmerohre mit den Trennstufen des oberen Abschnitts verbunden sind, so dass in den Trennstufen des unteren Abschnitts der Strippkolonne anfallende Wärme auf die in den Trennstufen des oberen Abschnitts der Strippkolonne befindlichen Speiseöl-Chargen durch indirekte Wärmeübertragung vorgewärmt werden können. Im mittleren Abschnitt der Strippkolonne wird wenigstens die stromwärts in der ersten Trennstufe befindliche Charge indirekt mit, vorzugsweise in einem Naturumlaufkessel erzeugten Hochdruckdampf erhitzt

Nach einem weiteren Erfindungsmerkmal wird das Speiseöl in der stromwärts letzten Trennstufe der Strippkolonne indirekt gekühlt.

Weitere Merkmale, Vorteile und Anwendungsmöglichkeiten des erfindungsgemäßen Verfahrens ergeben sich aus dem nachstehenden Beschreibung eines Ausführungsbeispiels in Verbindung mit dem in der Zeichnung dargestellten Verfahrensfließbild.

### Beschreibung einer bevorzugten Ausführungsform

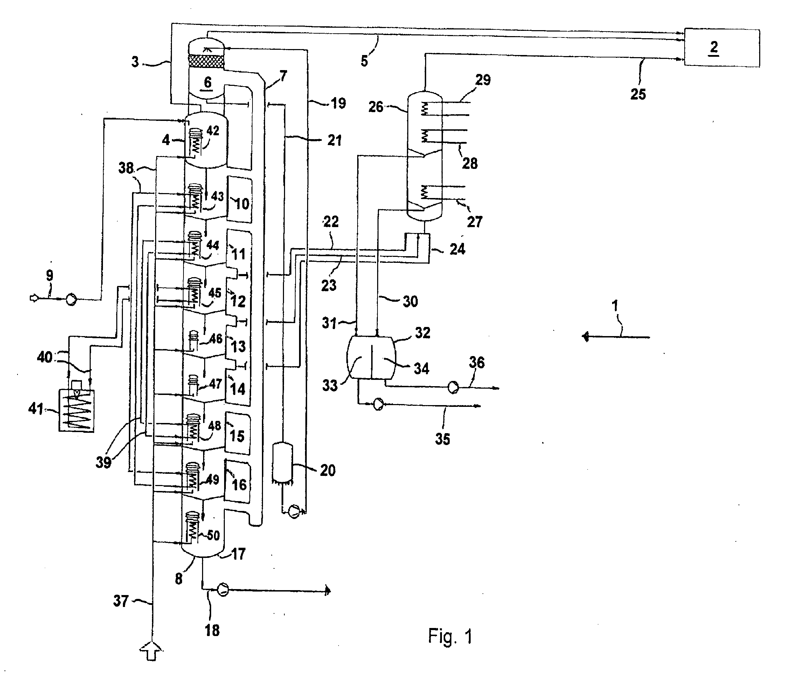

Siehe hierzu die Zeichnung, Fig. 1.
Nachdem in der halbkontinuierlich arbeitenden Wasserdampf-Destillationsanlage (1) mittels der Vakuum-Erzeugungsanlage (2), die über Leitung (3) an die Entgasungsstufe (4) und über Leitung (5) an den Brüdenwäscher (6) und an die Brüdenabgangsleitung (7) der Strippkolonne (8) angeschlossen ist, wird die Entgasungsstufe (4) mit einer über Leitung (9) zugeführten Charge von 6 t Rapsöl, das 1,5 Gew. % Fettsäure und jeweils 1000 ppm Tocopherole und Sterole enthält, befüllt und in der Entgasungsstufe (4) auf eine Temperatur von 80° C vorgewärmt. Danach beginnt der automatische Betrieb der Destillationsanlage (1), wobei jede Charge nach dem Verlassen der Entgasungsstufe (4) nacheinander die Trennstufen (10, 11, 12, 13, 14, 15, 16, 17) der Strippkolonne (8) durchströmt. Nach Ablauf einer Verweilzeit von 23 min je Trennstufe wird das Rapsöl durch automatisches Öffnen des Bodenventils in 2 bis 3 min in die jeweils nachfolgende Trennstufe entleert. Eine entsprechende Verriegelung in der Steuerung der Bodenventile sorgt dafür, dass das Entleeren erst dann erfolgt, wenn die nächstfolgende Trennstufe vollständig entleert ist.

In der ersten Trennstufe (10) wird das Rapsöl auf eine Temperatur von 110° C, in der anschließenden Trennstufe (11) auf eine Temperatur von 150° C und in der nachfolgenden Trennstufe (12) auf eine Endtemperatur von 250° C erwärmt. Die Endtemperatur von
250° C wird in den beiden folgenden Trennstufen (13, 14) beibehalten. In den anschließenden Trennstufen (15, 16, 17)) wird die Temperatur des Rapsöls zunächst auf 210° C, dann auf 160° C und danach auf 100° C abgesenkt, wobei in der letzten Trennstufe (17) das Rapsöl mit Kühlwasser indirekt gekühlt und dabei Heißwasser erzeugt wird. Über Leitung (18) wird aus dem Sumpf der letzten Trennstufe (17) vollständig desodoriertes Rapsöl abgezogen und aus dem Prozess ausgeleitet.

Die in den Trennstufen (10, 11, 15, 16, 17) gebildeten über seitliche Ausgänge in die Brüdenabgangsleitung (7) abgeführten Brüden werden dem Brüdenwäscher (6) aufgegeben und in diesem zu einem Fettsäure-Mischdestillat kondensiert, indem die Brüden direkt mit über Leitung (19) aus dem Wärmeübertrager (20) zugeführtem Fettsäure-Mischdestillat, das aus dem Brüdenwäscher (6) abgezogen und über Leitung (21) in den Wärmeübertrager (20) strömt, gekühlt werden. Die aus den Trennstufen (12, 13, 14) des mittleren Abschnitts der Strippkolonne (8) abströmenden Brüden werden über Leitungen (22, 23, 24) dem separaten über Leitung (25) mit der Vakuum-Erzeugungsanlage (2) verbundenen Kühlfalle (26) zugeführt, in der die Brüden mit eine Temperatur von 55 bis 65° C aufweisendem Kühlwasser mittels eines ersten Plattenwärmeübertragers (27) auf eine Temperatur von 130° C bei einem Druck von 1,8 mbar[a] und mittels eines zweiten Plattenwärmeübertragers (28) auf eine Temperatur von 70° C bei einem Druck von 1,6 mbar[a] indirekt gekühlt, wobei in dem ersten Plattenwärmeübertrager (27) der überwiegende Teil der Fettsäure zusammen mit den Sterolen und Tocopherolen und in dem zweiten Plattenwärmeübertrager (28) die restliche Fettsäure kondensieren. In einem dritten Plattenwärmeübertrager (29), der mit eine Temperatur von 40 bis 50° C besitzendem Kühlwasser beaufschlagt wird, werden die ggf. in den Brüden noch vorhandenen kurzkettigen Fettsäuren bei einer Temperatur von 55° C und einem Druck von 1,5 mbar[a] abgetrennt, so dass nahezu ausschließlich Wasserdampf über Leitung (25) abgesaugt wird. Die in den Plattenwärmeübertragern (27, 28) kondensierten Fraktionen werden über Leitungen (30, 31) abgeführt und getrennt in dem Vorlagebehälter (32) in den Kammern (33, 34) gespeichert, von wo aus die beiden Fraktionen getrennt über Leitungen (35, 36) in ein nicht dargestelltes kundenseitiges Tanklager gepumpt werden.

Über die Leitung (37) wird über eine je Trennstufe (10, 11, 12, 13, 14, 15, 16, 17) und eine für die Entgasungsstufe (4) abzweigende Seitenleitung Strippdampf in die jeweils in der Trennstufe und der Entgasungsstufe befindliche Charge eingeleitet und die Charge erwärmt, so dass die leichter flüchtige Inhaltsstoffe der Chargen gestrippt und mit den Brüden abgleitet werden.

Zusätzlich werden die in den im oberen Abschnitt der Destillationskolonne (8) befindlichen Trennstufen (10, 11) vorhandenen Chargen durch indirekte Wärmeübertragung nach dem Arbeitsprinzip eines Thermosyphons mit aus den im unteren Abschnitt der Destillationskolonne (8) angeordneten Trennstufen (15, 16) gewonnener Wärme erhitzt. Die jeweils geschlossenen Rohre (38, 39), sog. Wärmerohre, sind mit einem Arbeitsmedium gefüllt, dass das hermetisch abgekapselte Volumen zu einem kleineren Teil in flüssigem und zu einem größeren Teil in dampfförmigen Zustand ausfüllt. Darin befinden sich je eine Wärmübertragungsfläche für die Wärmequelle (Heizzone) und die Wärmesenke (Kühlzone). Bei dem in den Heizzonen der Trennstufen (15, 16) erfolgenden Wärmeeintrag beginnt das Arbeitsmedium zu verdampfen und der gebildete Dampf strömt in Richtung der Kühlzone, wo der Dampf wegen der vergleichsweise niedrigeren Temperatur kondensiert. Dabei wird die zuvor in den Trennstufen (15, 16) aufgenommene latente Wärme in den Trennstufen (10, 11) wieder abgegeben. Das nun wieder flüssige Arbeitsmedium kehrt durch Schwerkraft in die Trennstufen (15, 16) zurück, wobei. zweckmäßigerweise die Trennstufe (16) über das Wärmerohr (38) mit der Trennstufe (10) und die Trennstufe (15) über das Wärmerohr (39) mit der Trennstufe (11) verbunden sind. In der im mittleren Abschnitt der Strippkolonne (8) angebrachten Trennstufe (12) wird die Charge auf eine Endtemperatur von 245° C mit über die Kreislauf-Leitung (40) zugeführtem in der Heizeinrichtung (41) erzeugten Hochdruckdampf durch indirekten Wärmeübertragung erhitzt.

Die Zirkulation der Chargen in den Stufen (4, 10, 11, 12, 13, 14,15, 16,17) der Stippkolonne (8) erfolgt jeweils durch einen nach dem Arbeitsprinzip einer Mammutpumpe funktionierenden Umwälzapparat (42, 43, 44, 45, 46, 47, 48, 49, 50) mit der Folge einer effektiven Wärmeübertragung und eines effektiven Strippens durch den zugeführten Strippdampf.

Die mit dem erfindungsgemäßen Verfahren erzielten Vorteile sind insbesondere darin zu sehen, dass eine weitgehend sortenreine Destillationsfettsäure und eine mit Tocopherolen und Sterolen angereicherte Fraktion herstellen lässt, wobei sich unterschiedliche Speiseölsorten nacheinander ohne Mischung problemlos verarbeiten lassen.

## Patentansprüche

1. Verfahren zum Desodorieren von Speiseöl mittels einer halbkontinuierlich arbeitenden Wasserdampf-Destillationsanlage, umfassend eine Strippkolonne mit mehreren darin angeordneten gegeneinander absperrbaren Trennstufen, eine der Strippkolonne vorgeschaltete Entgasungsstufe und einem nachgeschalteten Brüdenwäscher, eine mit der Entgasungsstufe, den Trennstufen und dem Brüdenwäscher verbundene Vakuum-Erzeugungsanlage, je eine in die Entgasungsstufe und die Trennstufen mündende Zuleitung für Strippdampf, jeweils in den Trennstufen des oberen und des unteren Abschnitts der Strippkolonne angeordnete indirekte Wärmeübertragerflächen und eine mit den im oberen und im unteren Abschnitt der Strippkolonne angeordneten Trennstufen verbundene in den Brüdenwäscher mündende Brüdenabgangsleitung, bei dem zunächst in der Destillationsanlage ein Vakuum von 2 bis 7 mbär erzeugt, dann die Entgasungsstufe mit einer Charge Einsatz-Speiseöl befüllt, die Charge die Entgasungsstufe und die Trennstufen nacheinander automatisch nach vorgegebenen Verweilzeiten von 20 bis 40 min pro Stufe in Abhängigkeit von der Leistung gesteuert durchläuft und in der Entgasungsstufe und den Trennstufen mit Strippdampf behandelt wird, wobei die in der Entgasungsstufe mit Strippdampf auf eine Temperatur von 75 bis 80° C vorgewärmte Charge in den Trennstufen des oberen Abschnitts der Strippkolonne stufenweise bis auf eine Temperatur von 150 bis 180° C erhitzt, in den Trennstufen des mittleren Abschnitt der Strippkolonne stufenweise bis auf eine Temperatur von 230 bis 260° C aufgeheizt und in den Trennstufen des unteren Abschnitts der Strippkolonne stufenweise bis auf eine Temperatur von 90 bis 120° C abgekühlt wird, die aus den Trennstufen des oberen und des unteren Abschnitts der Strippkolonne abgehenden Brüden in dem Brüdenwäscher mit umlaufender versprühter Fettsäure gewaschen und zu einem Fettsäure-Mischdestillat kondensiert werden und die aus den Trennstufen (12, 13, 14) des mittleren Abschnitts der Strippkolonne abgehenden Brüden in wenigstens zwei Kondensationsstufen (27, 28) indirekt gekühlt und sortenrein fraktioniert in ein an Sterolen und Tocopherolen reiche und ein an Sterolen und Tocopherolen arme Fettsäurephase kondensiert werden, **dadurch gekennzeichnet, dass** wenigstens die in der stromwärts ersten Trennstufe (12) des mittleren Abschnitts der Strippkolonne (8) befindliche Charge indirekt mit Hochdruckdampf erwärmt wird und in einer dritten Kondensationsstufe (29) die von den Brüden mitgerissenen Speiseöltröpfchen abgeschieden werden.

2. Verfahren nach Anspruch 1, **dadurch gekennzeichnet, dass** die Destillationsanlage (1) mit wenigstens zwei Chargen desselben Einsatz-Speiseöls in Folge beschickt wird.

3. Verfahren nach einem der Ansprüche 1 und 2, **dadurch gekennzeichnet, dass** als Kondensationsstufe (29) ein Oberlächenwärmeübertrager eingesetzt wird.

4. Verfahren nach Anspruch 3, **dadurch gekennzeichnet, dass** der Oberflächenwärmeübertrager mit temperiertem Kühlwasser, gekühlt wird.

5. Verfahren nach einem der Ansprüche 1 bis 4, **dadurch gekennzeichnet, dass** die von den in den Trennstufen (15, 16, 17) des unteren Abschnitts der Strippkolonne befindlichen Chargen durch indirekte Wärmeübertragung gewonnene Wärme auf die in den Trennstufen (10, 11) des oberen Abschnitts der Strippkolonne befindlichen Chargen indirekt übertragen wird.

6. Verfahren nach einem der Ansprüche 1 bis 5, **dadurch gekennzeichnet, dass** von den in den Trennstufen (12, 13, 14) des mittleren Abschnitt der Strippkolonne befindlichen Chargen wenigstens die in der stromwärts ersten Trennstufe (12) befindliche Charge indirekt mit Hochdruckdampf erhitzt wird.

7. Verfahren nach einem der Ansprüche 1 bis 6, **dadurch gekennzeichnet, dass** die in der stromwärts letzten Trennstufe (17) der Strippkolonne (8) befindliche Charge indirekt gekühlt wird.

## Claims

1. A process for deodorizing edible oil by means of a semicontinuously operating steam distillation plant, comprising a stripping column with several separating stages arranged therein, which can be shut off against each other, a degassing stage upstream of the stripping column and a downstream vapor scrubber, a vacuum generation plant connected with the degassing stage, the separating stages and the vapor scrubber, one supply line each for stripping steam opening into the degassing stage and the separating stages, indirect heat exchanger surfaces each arranged in the separating stages of the upper and the lower portion of the stripping column, and a vapor discharge line opening into the vapor scrubber, which is connected with the separating stages arranged in the upper and in the lower portion of the stripping column, in which first a vacuum of 2 to 7 mbar is generated in the distillation plant, the degassing stage then is filled with a batch of feed edible oil, the batch automatically and in a controlled manner passes through the degassing stage and the separating stages one after the other after specified retention times of 20 to 40 min per stage in dependence on the power and in the degassing stage and the separating stages is treated with stripping steam, wherein the batch preheated in the degassing stage with stripping steam to a temperature of 75 to 80°C is incrementally heated in the separating stages of the upper portion of the stripping column up to a temperature of 150 to 180°C, in the separating stages of the middle portion of the stripping column is incrementally heated up to a temperature of 230 to 260°C, and in the separating stages of the lower portion of the stripping column is incrementally cooled down to a temperature of 90 to 120°C, the vapors discharged from the separating stages of the upper and the lower portion of the stripping column are washed in the vapor scrubber with circulating sprayed fatty acid and condensed to a fatty-acid mixed distillate, and the vapors discharged from the separating stages (12, 13, 14) of the middle portion of the stripping column are cooled indirectly in at least two condensation stages (27, 28) and after sorting and fractionating are condensed into a fatty acid phase rich in sterols and tocopherols and a fatty acid phase poor in sterols and tocopherols, **characterized in that** at least the batch present in the downstream first separating stage (12) of the middle portion of the stripping column (8) is heated indirectly with high-pressure steam, and in a third condensation stage (29) the edible oil droplets entrained by the vapors are separated.

2. The process according to claim 1, **characterized in that** the distillation plant (1) is charged with at least two batches of the same feed edible oil in succession.

3. The process according to any of claims 1 and 2, **characterized in that** as condensation stage (29) a surface heat exchanger is used.

4. The process according to claim 3, **characterized in that** the surface heat exchanger is cooled with tempered cooling water.

5. The process according to any of claims 1 to 4, **characterized in that** the heat obtained from the batches present in the separating stages (15, 16, 17) of the lower portion of the stripping column by indirect heat exchange is indirectly transmitted to the batches present in the separating stages (10, 11) of the upper portion of the stripping column.

6. The process according to any of claims 1 to 5, **characterized in that** of the batches present in the separating stages (12, 13, 14) of the middle portion of the stripping column at least the batch present in the downstream first separating stage (12) is heated indirectly with high-pressure steam.

7. The process according to any of claims 1 to 6, **characterized in that** the batch present in the downstream last separating stage (17) of the stripping column (8) is cooled indirectly.

## Revendications

1. Procédé de désodorisation d'huile alimentaire au moyen d'une installation d'entraînement à la vapeur d'eau fonctionnant en semi continu, comprenant une colonne de fractionnement ayant plusieurs étages de séparation, qui y sont disposés en pouvant être fermés les uns par rapport aux autres, un étage de dégazage en amont et un laveur de vapeur chaude en aval de la colonne de fractionnement, une installation de production de vide communiquant avec l'étage de dégazage, avec les étages de séparation et avec le laveur de vapeur chaude, respectivement un conduit d'apport de vapeur d'entraînement débouchant dans l'étage de dégazage et dans les étages de séparation, des surfaces de transmission indirecte de la chaleur disposées respectivement dans les étages de séparation de la partie supérieure et de la partie inférieure de la colonne de fractionnement et un conduit de sortie de vapeur chaude communiquant avec les étages de séparation disposés dans la partie supérieure et dans la partie inférieure de la colonne de fractionnement et débouchant dans le laveur de vapeur chaude, dans lequel on produit, d'abord dans l'installation d'entraînement à la vapeur d'eau, un vide de 2 à 7 mbar, puis on remplit l'étage de dégazage d'un lot d'huile alimentaire de charge, on fait passer la charge dans l'étage de dégazage et dans les étages de séparation les uns après les autres automatiquement après des temps de séjour donnés à l'avance de 20 à 40 min par étage commandés en fonction de la capacité et on la traite par de la vapeur d'entraînement dans l'étage de dégazage et dans les étages de séparation, la charge chauffée au préalable jusqu'à une température de 75 à 80°C dans l'étage de dégazage par de la vapeur d'entraînement étant portée par palier à une température de 150 à 180 °C dans les étages de séparation de la partie supérieure de la colonne de fractionnement, étant portée par palier à une température de 230 à 260°C dans les étages de séparation de la partie médiane de la colonne de fractionnement et étant refroidie par palier jusqu'à une température de 90 à 120°C dans les étages de séparation de la partie inférieure de la colonne de fractionnement, les vapeurs chaudes sortant des étages de séparation de la partie supérieure et de la partie inférieure de la colonne de fractionnement étant lavées dans le laveur de vapeur chaude par de l'acide gras pulvérisé en circulation et condensées en un distillat mixte d'acide gras et les vapeurs chaudes sortant des étages (12, 13, 14) de séparation de la partie médiane de la colonne de fractionnement étant refroidies indirectement dans au moins deux étages (27, 28) de condensation et fractionnées par espèce pure en une phase riche en stérols et en tocophérols et en une phase pauvre en stérols et en tocophérols, **caractérisé en ce qu'**on réchauffe indirectement par de la vapeur sous haute pression au moins la charge se trouvant dans le premier, dans le sens du courant, étage (12) de séparation de la partie médiane de la colonne (8) de fractionnement et on sépare, dans un troisième étage (29) de condensation, les gouttelettes d'huile alimentaire entraînées par les vapeurs chaudes.

2. Procédé suivant la revendication 1, **caractérisé en ce qu'**on charge successivement, dans l'installation (1) d'entraînement à la vapeur d'eau, au moins deux lots de la même huile alimentaire de charge.

3. Procédé suivant les revendications 1 et 2, **caractérisé en ce qu'**on utilise un dispositif de transmission de chaleur en surface comme étage (29) de condensation.

4. Procédé suivant la revendication 3, **caractérisé en ce qu'**on refroidit le dispositif de transmission de chaleur en surface par de l'eau de refroidissement de température tempérée.

5. Procédé suivant l'une des revendications 1 à 4, **caractérisé en ce que** la chaleur obtenue par la transmission de chaleur indirecte des lots se trouvant dans les étages (15, 16, 17) de séparation de la partie inférieure de la colonne de fractionnement est transmise indirectement au lot se trouvant dans les étages (10, 11) de séparation de la partie supérieure de la colonne de fractionnement.

6. Procédé suivant l'une des revendications 1 à 5, **caractérisé en ce que**, parmi les lots se trouvant dans les étages (12, 13, 14) de séparation de la partie médiane de la colonne de fractionnement, on chauffe indirectement, par de la vapeur sous haute pression, au moins les lots se trouvant dans le premier, dans le sens du courant, étage (12) de séparation.

7. Procédé suivant l'une des revendications 1 à 6, **caractérisé en ce qu'**on refroidit indirectement le lot se trouvant dans le dernier, dans le sens du courant, étage (14) de séparation de la colonne (8) de fractionnement.
